# EUROPEAN PATENT SPECIFICATION

(11) **EP 4 075 697 B1**
(45) Date of publication and mention of the grant of the patent: **21.08.2024**
(21) Application number: 20909335.0
(22) Date of filing: 29.12.2020
(51) Int. Cl.: H04L 1/16, H04L 65/80, H04L 69/163

(54) **MESSAGE TRANSMISSION METHOD AND ELECTRONIC DEVICE**
NACHRICHTVERARBEITUNGSVERFAHREN UND ELEKTRONISCHE VORRICHTUNG
PROCÉDÉ DE TRANSMISSION DE MESSAGE ET DISPOSITIF ÉLECTRONIQUE

(30) Priority: 31.12.2019 CN 201911419211
(43) Date of publication of application: 19.10.2022
(73) Proprietor: Huawei Technologies Co., Ltd., Shenzhen, Guangdong 518129, (CN)
(72) Inventor: WANG, Weiguang, Shenzhen, Guangdong 518129 (CN); LI, Feng, Shenzhen, Guangdong 518129 (CN); ZHOU, Xingwang, Shenzhen, Guangdong 518129 (CN); LI, Yizhou, Shenzhen, Guangdong 518129 (CN); CHEN, Gaorong, Nanjing, Jiangsu 210014 (CN)
(74) Representative: Gill Jennings & Every LLP
(86) International application number: PCT/CN2020/140904
(87) International publication number: WO 2021/136278

(56) References cited:
- WO-A1-2018/170699
- WO-A1-2018/170699
- CA-A1- 3 057 380
- CN-A- 1 567 915
- CN-A- 1 567 915
- CN-A- 107 251 605
- CN-A- 108 829 629
- US-A1- 2003 023 746
- US-A1- 2018 110 076
- DEFENSE ADVANCED RESEARCH PROJECTS AGENCY INFORMATION SCIENCES INSTITUTE UNIVERSITY OF SOUTHERN CALIFORNIA 4676 ADMIRALTY WAY MARI: "TRANSMISSION CONTROL PROTOCOL DARPA INTERNET PROGRAM PROTOCOL SPECIFICATION prepared for Information Processing Techniques Office 1400 Wilson Boulevard 22209 by ; rfc793.txt", TRANSMISSION CONTROL PROTOCOL DARPA INTERNET PROGRAM PROTOCOL SPECIFICATION PREPARED FOR INFORMATION PROCESSING TECHNIQUES OFFICE 1400 WILSON BOULEVARD 22209 BY ; RFC793.TXT, INTERNET ENGINEERING TASK FORCE, IETF; STANDARD, INTERNET SOCIETY (ISOC) 4,, 1 September 1981 (1981-09-01), XP015006775
- FLOYD ICIR A ARCIA D ROS TELECOM BRETAGNE J IYENGAR FRANKLIN & MARSHALL COLLEGE S: "Adding Acknowledgement Congestion Control to TCP; rfc5690.txt", ADDING ACKNOWLEDGEMENT CONGESTION CONTROL TO TCP; RFC5690.TXT, INTERNET ENGINEERING TASK FORCE, IETF; STANDARD, INTERNET SOCIETY (ISOC) 4, RUE DES FALAISES CH- 1205 GENEVA, SWITZERLAND, 2 February 2010 (2010-02-02), pages 1 - 33, XP015068166

## Description

### TECHNICAL FIELD

Embodiments of this application relate to the field of communications technologies, and in particular, to a packet transmission method and an electronic device.

### BACKGROUND

Reliable transmission is a transmission mechanism that uses an acknowledgment mechanism to ensure accurate transmissions of service packets at sending devices and receiving devices. A principle of a reliable transmission mechanism is that a sending device sends a service packet to a receiving device. If receiving the corresponding service packet, the receiving device may send an acknowledgment (acknowledgment, ACK) packet to the sending device. If the corresponding service packet is not received, the receiving device may send a negative acknowledgment (negative acknowledgment, NACK) packet to the sending device. In this application, the ACK packet and the NACK packet may be collectively referred to as response packets. The sending device may determine a transmission success rate, a retransmission mechanism, and the like based on the response packet, to ensure service packet transmission reliability.

In an existing reliable transmission mechanism, the receiving device generates a response packet corresponding to each service packet sent by the sending device, and sends the response packet to the sending device. In this case, the receiving device consumes a large quantity of resources, and a large quantity of transmission resources are occupied.

CA 3 057 380 A1 describes a control signaling transmission method, a base station and a terminal. The method includes: sending, by a base station, a first downlink control signaling to a terminal, and indicating, through the first downlink control signaling, whether the terminal needs to feed back an acknowledgement message corresponding to a reception of the first downlink control signaling; and receiving the acknowledgement message fed back by the terminal if the base station indicates that the terminal needs to feed back the acknowledgement message.

Document US2003023746 desceibes a method and system for exchanging control packets to support the congestion control in a digitally switched packet telecommunication environment.

### SUMMARY

The present invention is defined by the features disclosed in the independent claims. Additional embodiments are defined in the dependent claims. This application provides a packet transmission method and an electronic device, to resolve a problem that an existing packet transmission method occupies a large quantity of resources.

According to a first aspect, this application provides a packet transmission method, including: A sending device sends at least one first-type service packet to a receiving device. A value of a response packet request field in the first-type service packet is a first value, and the response packet request field indicates whether the receiving device sends a response packet to the sending device. If the sending device needs to obtain the response packet, the sending device sends at least one second-type service packet to the receiving device. A value of a response packet request field in the second-type service packet is a second value. The sending device receives at least one response packet for the second-type service packet from the receiving device.

In this embodiment of this application, the sending device may negotiate with the receiving device to set the response packet request field in the service packet. The sending device may change the value of the response packet request field in the service packet based on whether the response packet needs to be obtained. If the response packet does not need to be obtained, and the sending device, for example, sends a first-type service packet to the receiving device, a value of a response packet request field in the first-type service packet is a first value. In a scenario in which the the response packet needs to be obtained, and the sending device, for example, sends a second-type service packet to the receiving device, a value of a response packet request field in the second-type service packet is a second value. In other words, if the response packet needs to be obtained, the sending device changes a value of a response packet request field in a subsequently sent service packet. Then the sending device may receive the response packet for the second-type service packet from the receiving device. It can be seen that, when the sending device needs to obtain the response packet, the sending device may notify the receiving device by changing the value of the response packet request field in the service packet. This can reduce a quantity of response packets generated and sent by the receiving device, to save resources of the receiving device and transmission resources.

In a possible design, that the sending device sends at least one second-type service packet to the receiving device includes: the sending device sends one second-type service packet to the receiving device. In this implementation, if the response packet needs to be obtained, the sending device may change a value of a response packet request field in one service packet to be sent, to trigger the receiving device to send the response packet. In this way, the receiving device may be notified through a change of the value of the response packet request field in the service packet.

In a possible design, that the sending device sends at least one second-type service packet to the receiving device includes: the sending device sends a first preset quantity of second-type service packet to the receiving device, where the first preset quantity is an integer greater than or equal to 2. The service packet may be lost in a sending process. Therefore, if a value of a response packet request field of only one service packet is different from that of another service packet, the sending device may not obtain the response packet in a timely manner. Based on this, if the response packet needs to be obtained, the sending device may send the first preset quantity of second-type service packets, to ensure that the receiving device can receive the second-type service packets at a specific packet loss rate. This ensures that the sending device can receive the response packet in a timely manner.

In a possible design, that the sending device sends at least one second-type service packet to the receiving device includes: the sending device sends the second-type service packet to the receiving device within a first preset time period, where the first preset time period is less than one RTT. This implementation can ensure that the receiving device can receive the second-type service packet at a specific packet loss rate, so that the sending device can receive the response packet in a timely manner.

In a possible design, that the sending device sends at least one second-type service packet to the receiving device includes: the sending device continuously sends the second-type service packet to the receiving device before the sending device needs to obtain the response packet next time. This implementation can ensure that the receiving device can receive the second-type service packet at a specific packet loss rate, so that the sending device can receive the response packet in a timely manner.

In a possible design, after sending at least one second-type service packet to the receiving device, and before the sending device needs to obtain the response packet next time, the sending device further sends at least one third-type service packet to the receiving device. A value of a response packet request field in the third-type service packet is a third value; and the third value is different from the second value. In this implementation, if the response packet needs to be obtained, the sending device may change a value of a response packet request field in at least one subsequent service packet, to trigger the receiving device to send the response packet.

In a possible design, after sending the at least one first-type service packet to the receiving device, and before sending the at least one second-type service packet to the receiving device, the sending device further detects whether timing of a round trip time RTT ends. The RTT is total duration from a time point when the sending device sends a service packet to a time point when the sending device receives a response packet corresponding to the service packet from the receiving device. If timing of the RTT has ended, the sending device determines that the response packet needs to be obtained. The response packet may be used by the sending device to measure an RTT of a communications link, calculate RTO, determine a network status and a packet loss cause, clear a retransmission queue, and the like. Based on this, the sending device in this embodiment of this application may determine, based on at least one of the foregoing requirements, whether the response packet needs to be obtained.

In a possible design, after sending the at least one first-type service packet to the receiving device, and before sending the at least one second-type service packet to the receiving device, the sending device further detects whether a total quantity of to-be-retransmitted service packets reaches a second preset quantity. If the total quantity of to-be-retransmitted service packets reaches the second preset quantity, the sending device determines that the response packet needs to be obtained. The response packet may be used by the sending device to measure an RTT of a communications link, calculate RTO, determine a network status and a packet loss cause, clear a retransmission queue, and the like. Based on this, the sending device in this embodiment of this application may determine, based on at least one of the foregoing requirements, whether the response packet needs to be obtained.

In a possible design, that the sending device receives at least one response packet for the second-type service packet from the receiving device includes: the sending device receives one response packet from the receiving device. In this implementation, the sending device changes the value of the response packet request field in the service packet, to trigger the receiving device to send only one response packet corresponding to a plurality of service packets. This can reduce resources used by the receiving device to generate the response packet.

In a possible design, that the sending device receives at least one response packet for the second-type service packet from the receiving device includes: the sending device receives at least two response packets from the receiving device. The at least two response packets include same content. In this implementation, the sending device may change the value of the response packet request field in the service packet, to trigger the receiving device to send at least two response packets. This ensures that the sending device can receive the response packet in a timely manner.

In a possible design, that the sending device receives at least one response packet for the second-type service packet from the receiving device includes: the sending device receives at least two response packets from the receiving device. The at least two response packets include different content. In this implementation, the sending device may change the value of the response packet request field in the service packet, to trigger the receiving device to send at least two response packets. This ensures that the sending device can receive the response packet in a timely manner.

According to a second aspect, this application provides a packet transmission method, including: A receiving device receives at least one first-type service packet from a sending device. A value of a response packet request field in the first-type service packet is a first value, and the response packet request field indicates whether the receiving device sends a response packet to the sending device. The receiving device receives at least one second-type service packet from the sending device. A value of a response packet request field in the second-type service packet is a second value. The receiving device sends at least one response packet for the second-type service packet to the sending device.

After receiving a service packet, the receiving device in this application may read a value of a response packet request field in the service packet, and then compare the value with a value of a response packet request field in a previously received service packet. If the two values are the same, the receiving device does not send the response packet to the sending device. If the two values are different, the receiving device sends the response packet to the sending device. For example, the receiving device receives any first-type service packet, and the value of the response packet request field in the first-type service packet is a first value and is the same as the value of the response packet request field in the previously received first-type service packet. Then the receiving device does not send the response packet to the sending device. When the receiving device receives a second-type service packet, the value of the response packet request field in the second-type service packet is a second value. The second value and the first value are different. Then the receiving device sends the response packet to the sending device. In this way, the receiving device can send the response packet to the sending device based on a requirement of the sending device, to reduce a quantity of response packets generated and sent by the receiving device. This can save resources of the receiving device and transmission resources.

In a possible design, that the receiving device sends at least one response packet for the second-type service packet to the sending device includes: the receiving device sends one response packet for the second-type service packet to the sending device. In this implementation, the receiving device may send only one response packet corresponding to a plurality of service packets based on a requirement of the sending device. This can reduce resources used by the receiving device to generate the response packet.

In a possible design, that the receiving device sends at least one response packet for the second-type service packet to the sending device includes: the receiving device sends at least two response packets for the second-type service packet to the sending device. The at least two response packets include same content. In a sending process, the response packet may be lost. Therefore, if the receiving device sends only one response packet to the sending device, the sending device may fail to receive the response packet. Based on this, after generating one response packet, the receiving device sends the response packet to the sending device at least twice. This can ensure that the sending device receives the response packet.

In a possible design, that the receiving device sends at least one response packet for the second-type service packet to the sending device includes: the receiving device sends at least two response packets for the second-type service packet to the sending device. The at least two response packets include different content. In this embodiment, after receiving a first second-type service packet, the receiving device may send a first response packet for the first second-type service packet to the sending device. After receiving a second second-type service packet, the receiving device may send a second response packet for the second second-type service packet to the sending device. This can ensure that the sending device receives the response packet.

In a possible design, the receiving device receives at least one third-type service packet from the sending device, and a value of a response packet request field in the third-type service packet is a third value. The third value and the second value are different. Then the receiving device does not send the response packet for the third-type service packet to the sending device. In this implementation, the receiving device sends the response packet to the sending device only when the sending device needs to obtain the response packet. This can reduce a quantity of response packets generated and sent by the receiving device, to save resources.

According to a third aspect, this application provides a sending device. The sending device has functions of implementing the behaviors of the sending device in the foregoing methods. The functions may be implemented by hardware, or may be implemented by hardware by executing corresponding software. The hardware or the software includes one or more modules corresponding to the foregoing functions. In a possible design, a structure of the sending device includes a transmitter and a receiver. The transmitter is configured to send a service packet between the sending device and a receiving device, and the receiver is configured to receive a response packet between the sending device and the receiving device. The sending device may further include a processor and a memory. The processor is configured to process functions of the sending device other than receiving and sending a packet in the foregoing method. The memory is configured to be coupled to the processor, and store program instructions and data required by the sending device.

According to a fourth aspect, this application provides a receiving device. The receiving device has functions of implementing the behaviors of the receiving device in the foregoing methods. The functions may be implemented by hardware, or may be implemented by hardware by executing corresponding software. The hardware or the software includes one or more modules corresponding to the foregoing functions. In a possible design, a structure of the receiving device includes a transmitter and a receiver. The transmitter is configured to send a response packet between the receiving device and a sending device, and the receiver is configured to receive a service packet between the sending device and the receiving device. The receiving device may further include a processor and a memory. The processor is configured to process functions of the receiving device other than receiving and sending a packet in the foregoing method. The memory is configured to be coupled to the processor, and store program instructions and data required by the receiving device.

According to a fifth aspect, this application provides a computer storage medium. The computer storage medium stores instructions. When the instructions are run on a computer, the computer is enabled to perform some or all steps of the packet transmission method in the first aspect, the second aspect, the possible implementations of the first aspect, and the possible implementations of the second aspect.

According to a sixth aspect, this application provides a computer program product. When the computer program product runs on a computer, the computer is enabled to perform some or all steps of the packet transmission method in the first aspect, the second aspect, the possible implementations of the first aspect, and the possible implementations of the second aspect.

To resolve a problem in the conventional technology, a service packet in the technical solutions of this application includes a response packet request field. Based on this, a sending device may send a first-type service packet to a receiving device. A value of a response packet request field in the first-type service packet is a first value. When the sending device needs the receiving device to send a response packet, the sending device sends a second-type service packet to the receiving device. A value of a response packet request field in the second-type service packet is a second value. Correspondingly, after receiving the second-type service packet, the receiving device determines that the second value is different from the first value. Then the receiving device responds to a trigger of the second-type service packet and sends the response packet to the sending device. In this way, the receiving device can send the response packet to the sending device based on a requirement of the sending device, to reduce a quantity of response packets and save resources while ensuring transmission reliability.

### BRIEF DESCRIPTION OF DRAWINGS

FIG. 1 is a schematic diagram of a packet transmission scenario according to this application;
FIG. 2 is a signaling interaction diagram of an example of a packet transmission method 10 according to this application;
FIG. 3A is a schematic diagram of a first example of a scenario of sending a second-type service packet according to this application;
FIG. 3B is a schematic diagram of a second example of a scenario of sending a second-type service packet according to this application;
FIG. 3C is a schematic diagram of a third example of a scenario of sending a second-type service packet according to this application;
FIG. 3D is a schematic diagram of a fourth example of a scenario of sending a second-type service packet according to this application;
FIG. 4A is a schematic diagram of a scenario of a wireless network architecture 41 according to this application;
FIG. 4B is a schematic diagram of a scenario of a segmented network architecture 42 according to this application;
FIG. 4C is a schematic diagram of a scenario of an end-to-end network architecture 43 according to this application;
FIG. 5 is a schematic diagram of a segmented network architecture 50 according to this application;
FIG. 6 is a signaling interaction diagram of a packet transmission method 20 according to this application;
FIG. 7A is a schematic diagram of a structure of a sending device 70 according to this application;
FIG. 7B is a schematic diagram of a structure of a sending device 71 according to this application;
FIG. 8A is a schematic diagram of a structure of a receiving device 80 according to this application; and
FIG. 8B is a schematic diagram of a structure of a receiving device 81 according to this application.

### DESCRIPTION OF EMBODIMENTS

The following clearly describes technical solutions in this application with reference to accompanying drawings in this application.

Terms used in the following embodiments of this application are only intended to describe particular embodiments, and are not intended to limit this application. Terms "one", "a", "the", "the foregoing", "this", and "the one" of singular forms used in this specification and the appended claims of this application are also intended to include plural forms, unless otherwise specified in the context clearly. It should also be understood that although the terms first, second, and the like may be used to describe a class of objects in the following embodiments, the objects should not be limited to these terms. The terms are used only to distinguish between specific objects of this class of objects. For example, although the terms first, second, and the like may be used to describe a service packet in the following embodiments, the service packet should not be limited to these terms. These terms are only used to distinguish service packets with different values of response packet request fields. The same applies to other classes of objects that may be described by using the terms first, second, and the like in the following embodiments, and details are not described herein again.

The following describes technical scenarios in embodiments of this application with reference to the accompanying drawings.

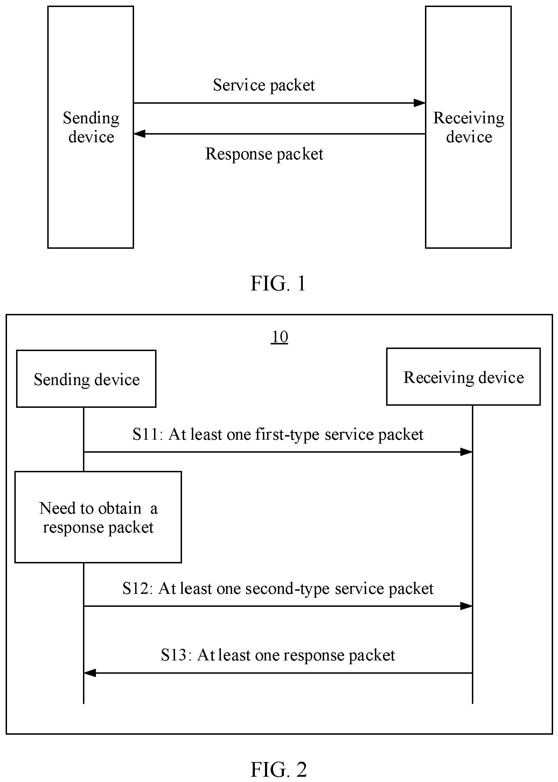

As shown in FIG. 1, this application relates to a sending device and a receiving device. After establishing a communications connection to the receiving device, the sending device may be configured to send a service packet to the receiving device. The receiving device may be configured to generate a response packet based on a receiving status of the service packet, and then send the response packet to the sending device. The response packet is a necessary technical feature for a reliable transmission between the sending device and the receiving device.

The sending device in this application may be an electronic device that supports a packet transmission protocol. The transmission protocol supported by the sending device includes but is not limited to a reliable transmission protocol such as a transmission control protocol (transmission control protocol, TCP). In some embodiments, the sending device may be a source device that sends the service packet. In some other embodiments, the sending device may be a proxy device. The proxy device is configured to forward the service packet from the source device to the receiving device, and send the response packet to the source device. The response packet is a response of the proxy device to the service packet from the source device. In some other embodiments, the sending device may be any node device (including the source device) other than the receiving node in a segmented network. For example, the sending device may be a smartphone, a tablet computer, a vehicle-mounted device, a layer 2 switch (layer 2 switch), a layer 3 switch (layer 3 switch), a router, a modem.

The receiving device in this application may be an electronic device that supports a packet transmission protocol. In this embodiment, a packet transmission protocol used by the receiving device is, for example, the same as a packet transmission protocol used by the sending device. In some other embodiments, the sending device is the source device in an end-to-end scenario, and the receiving device may be a destination device in the end-to-end scenario. In some other embodiments, the sending device is a proxy device, and the receiving device may be the destination device. In some other embodiments, the sending device is any node device in a segmented network, and the receiving device may be a next-hop node device (including the destination device) of the sending device in the segmented network. For example, the receiving device may be a smartphone, a tablet computer, a vehicle-mounted device, a layer 2 switch (layer 2 switch), a layer 3 switch (layer 3 switch), a router, a modem.

The response packets in this application include an ACK packet and a NACK packet. The ACK packet indicates that the receiving device correctly receives the service packet sent by the sending device. The NACK packet indicates that there is an error when the receiving device receives the service packet sent by the sending device, for example, the receiving device does not receive the service packet, and the receiving device requires the sending device to resend the service packet with a receiving error. For example, the transmission scenario in this application is a reliable transmission scenario. Based on this, the sending device may allocate a sequence number to each service packet. A sequence number of a service packet increases with a sending sequence of the service packet. Further, in some embodiments, the receiving device correctly receives, for example, service packets whose sequence numbers are 1 to 10, and the receiving device generates an ACK packet. The ACK packet may include an acknowledgment number (acknowledgment number). The acknowledgment number of the ACK packet is 11, to indicate the sending device that the receiving device is to receive a service packet whose sequence number is 11. In some other embodiments, for example, the receiving device receives service packets whose sequence numbers are 1, 2, 4, and 6, but does not receive service packets whose sequence numbers are 3 and 5, and the receiving device generates a NACK packet. The NACK packet includes a field for indicating a packet that is not successfully received. The field may include sequence numbers 3 and 5, to indicate the sending device to resend the service packets whose sequence numbers are 3 and 5.

With reference to the implementation scenario shown in FIG. 1, in a typical packet sending method, the receiving device may detect whether other data needs to be sent to the sending device after receiving one service packet. If other data needs to be sent to the sending device, the data to be sent and the response packet are sent to the sending device together. If no other data needs to be sent to the sending device, the response packet is sent to the sending device after a preset delay. This can reduce a quantity of response packets sent by the receiving device to the sending device, but the quantity that can be reduced is quite limited, and a large quantity of resources are still occupied for generating and sending the response packets.

This application provides a packet transmission method and an electronic device. The service packet in this application includes a response packet request field. When a sending device needs a receiving device to send a response packet, the sending device changes a value of a response packet request field in a service packet to be sent. The receiving device determines that a value of a response packet request field in a received service packet is different from a value of a response packet request field in a last received service packet. Then the receiving device generates and sends the response packet to the sending device. In this way, the receiving device can send the response packet to the sending device based on a requirement of the sending device, to reduce a quantity of response packets and save resources while ensuring transmission reliability.

Embodiments of this application are further applicable to another future-oriented communications technology. Network architectures and service scenarios described in this application are intended to describe the technical solutions in this application more clearly, and do not constitute a limitation on the technical solutions provided in this application. A person of ordinary skill in the art may know that: With evolution of network architectures and emergence of new service scenarios, the technical solutions provided in this application are further applicable to similar technical problems.

The following describes an example of a packet transmission method provided in embodiments of this application.

First, technical terms used in embodiments of this application are described.

A service packet is a packet that carries a data packet sent by a sending device to a receiving device. The service packet includes a to-be-sent data packet and services that need to be executed during a data packet transmission. For example, services include protocol analysis, information filtering, data packet encryption, table search, and routing. In embodiments of this application, a header of the service packet includes a response packet request field. For example, in embodiments of this application, the response packet request field in the service packet may be set through negotiation between the sending device and the receiving device.

A round trip time (round-trip time, RTT) is total duration from a time point at which a sending device sends a service packet to a time point at which the sending device receives a response packet corresponding to the service packet from a receiving device.

A retransmission timeout (retransmission timeout, RTO) is maximum allowed duration from a time point at which a sending device sends a service packet to a time point at which the sending device receives an ACK packet of the packet. If no corresponding ACK packet is received within the maximum allowed duration, the sending device performs a retransmission operation on the service packet.

A retransmission queue is a queue formed by service packets that have been sent and service packets that need to be retransmitted. After receiving an ACK packet corresponding to a service packet in the retransmission queue, a sending device clears the corresponding service packet from the retransmission queue.

A response packet is a response that is about a service packet receiving status and that is made by a receiving device, to ensure transmission reliability. The response packet may be, for example, a TCP packet, and may include an ACK packet and a NACK packet. The ACK packet indicates that the receiving device correctly receives a service packet sent by a sending device. The NACK packet indicates that there is an error when the receiving device receives a service packet sent by a sending device, and requires the sending device to resend the service packet with a receiving error.

A value of a response packet request field indicates whether a receiving device sends a response packet to a sending device. For example, a response packet request field and a sequence number of a service packet are set in a header at a same layer. The value of the response packet request field may be set by the sending device. The response packet request field may be at least one bit. For example, before transmitting the service packet, the sending device may set an initial value of the response packet request field. For example, the response packet request field is one bit, and the sending device sets the initial value of the response packet request field to 0.

FIG. 2 is a signaling interaction diagram of a packet transmission method 10 according to this application. The packet transmission method 10 (referred to as the method 10) includes the following steps.

Step S11: A sending device sends at least one first-type service packet to a receiving device.

A value of a response packet request field in the first-type service packet is a first value. For example, the first value is 0 or 1.

In some embodiments, the at least one first-type service packet is a first batch of service packets sent by the sending device to the receiving device. In this embodiment, the first value is an initial value of a response packet request field, for example, 0. In some other embodiments, the first-type service packet is a last-type service packet sent by the sending device before a response packet needs to be obtained anytime. In some other embodiments, the first value may vary with different implementation scenarios. For details, refer to descriptions in the following embodiments, and details are not described herein again.

Step S12: If the response packet needs to be obtained, the sending device sends at least one second-type service packet to the receiving device.

A value of a response packet request field in the second-type service packet is a second value. In some embodiments, the first value is 0, and the second value is 1. In some other embodiments, the first value is 1, and the second value is 0.

It should be noted that, in a reliable transmission scenario, the response packet may indicate a service packet receiving status of the receiving device, and may be used by the sending device to measure an RTT of a communications link, calculate RTO, determine a network status and a packet loss cause, clear a retransmission queue, and the like. Based on this, the sending device may determine a scenario in which at least one of the foregoing operations needs to be performed based on the response packet as a scenario in which the response packet needs to be obtained. For example, the sending device determines a scenario in which the RTT needs to be measured based on the response packet as the scenario in which the response packet needs to be obtained. For another example, the sending device determines a scenario in which the retransmission queue needs to be cleared as the scenario in which the response packet needs to be obtained.

For example, in some embodiments, the sending device may detect whether timing of the RTT ends. If timing of the RTT ends, the sending device determines that the response packet needs to be obtained, and then sends the at least one second-type service packet to the receiving device. If timing of the RTT has not ended, the sending device continues to send the first-type service packet. In some other embodiments, the sending device detects whether a total quantity of to-be-retransmitted service packets reaches a second preset quantity. If the total quantity of to-be-retransmitted service packets reaches the second preset quantity, the sending device determines that the response packet needs to be obtained, and then sends the at least one second-type service packet to the receiving device. If the total quantity of to-be-retransmitted service packets does not reach the second preset quantity, the sending device continues to send the first-type service packet.

In an actual operation, the sending device may determine, after sending each service packet, whether the response packet needs to be obtained. Then the sending device may determine, based on a determining result, a service packet to be sent.

It may be understood that the foregoing conditions for determining whether the response packet needs to be obtained are merely an example for description, and constitute no limitation on the solutions in embodiments of this application. In some other embodiments, the sending device may alternatively determine, based on a network status, whether the response packet needs to be obtained. For example, when determining that the network status needs to be detected, the sending device determines that the response packet needs to be obtained. Details are not described herein again.

Further, after determining that the response packet needs to be obtained, the sending device changes a value of a response packet request field in the service packet to be sent, to send the at least one second-type service packet to the receiving device, so as to trigger the receiving device to send the response packet to the sending device.

The following describes an example of an implementation of step S12.

Implementation 1: The sending device sends one second-type service packet to the receiving device. Before the sending device needs to obtain a response packet next time, the sending device sends only third-type service packets to the receiving device. A value of a response packet request field in the third-type service packet is, for example, a third value.

In some embodiments, if the response packet request field is one bit, the third value may be the same as the first value. In some other embodiments, if the response packet request field is greater than one bit, the third value is different from the second value. For example, the third value and the first value may be the same or different. For example, the response packet request field is two bits, the first value may be 00, the second value may be 01, and the second value may be 10.

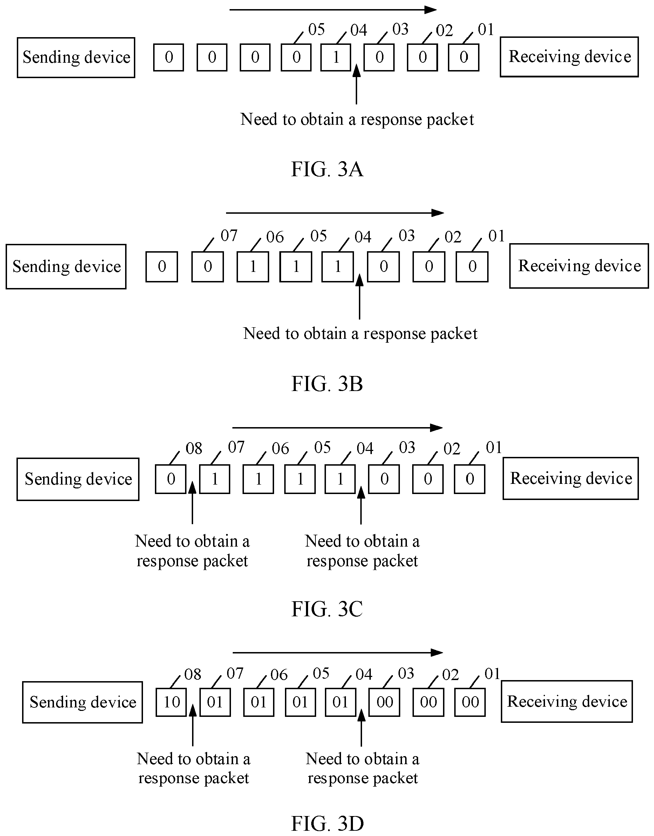

As shown in FIG. 3A, for example, each block indicates one service packet, and a value in each block is a value of a response packet request field in the service packet. A sending device sends the service packets according to a sequence indicated by an arrow in the figure. For example, if no response packet needs to be obtained, the sending device sends a service packet 01, a service packet 02, and a service packet 03. The service packet 01, the service packet 02, and the service packet 03 are first-type service packets in this application. In this embodiment, a value of a response packet request field in the first-type service packet is, for example, 0. Further, after sending the service packet 03, if the sending device determines that a response packet needs to be obtained, the sending device sets a value of a response packet request field in a service packet 04 to 1. The service packet 04 is a second-type service packet in this application. Then the sending device may reset a value of a response packet request field in a service packet 05 or the like to 0 until the response packet needs to be obtained next time. In this embodiment, service packets from the service packet 05 to a service packet for which the response packet needs to be obtained next time is referred to as a third-type service packet.

It should be noted that FIG. 3A is described by using an example in which the response packet request field is one bit. Therefore, the value of the response packet request field of the service packet 05 or the like in FIG. 3A is reset to 0. In some embodiments, if the response packet request field is greater than one bit, the sending device sets a value of a response packet request field in the third-type service packet to be different from the second value. This is not limited in this application.

It can be learned that, in this implementation, if the response packet needs to be obtained, the sending device may change a value of a response packet request field in one service packet to be sent, to trigger the receiving device to send the response packet. The receiving device may be notified through a change of the value of the response packet request field in the service packet.

However, the service packet may be lost in a sending process. In this case, if a value of a response packet request field in only one service packet (for example, the service packet 04) is different from that of another service packet, and the service packet (for example, the service packet 04) is not received by the receiving device, the sending device may not obtain the response packet in a timely manner. To resolve the problem, embodiments of this application further discloses an implementation 2 and an implementation 3.

Embodiment 2: After sending a first preset quantity of second-type service packet to the receiving device, and before the sending device needs to obtain the response packet next time, the sending device sends only third-type service packets to the receiving device. The value of the response packet request field in the third-type service packet is, for example, a third value. The first preset quantity is an integer greater than or equal to 2. An implementation of the third-type service packet and the third value is described as in the implementation 1.

As shown in FIG. 3B, meanings of blocks, values in the blocks, and an arrow in FIG. 3B are all as described in the embodiment shown in FIG. 3A. Details are not described herein again. For example, a first-type service packet sent by a sending device also includes a service packet 01, a service packet 02, and a service packet 03, and the sending device needs to obtain a response packet after sending the service packet 03. Further, a second-type service packet sent by the sending device includes, for example, a service packet 04, a service packet 05, and a service packet 06, and values of response packet request fields in the service packet 04, the service packet 05, and the service packet 06 are all 1. Then, before the response packet needs to be obtained next time, the sending device sends third-type service packets. Service packets from a service packet 07 to a service packet for which the response packet needs to be obtained next time are third-type service packets.

In a possible implementation, a first preset quantity may be preset by a skilled person. For example, the first preset quantity may be set based on a condition that a response packet needs to be obtained and a packet loss rate, to ensure that the receiving device can receive at least one second-type service packet at a specific packet loss rate. For example, the sending device sends 100 service packets in an interval between two attempts to obtain the response packet, a current packet loss rate is 4%, and the first preset quantity is 5.

In another possible implementation, the first preset quantity of service packets are also service packets within a first preset time period. The first preset time period may be determined by a person skilled in the art. For example, the sending device obtains the response packet once in each RTT. In this case, the sending device may send a second-type service packet in the first half of the time period of one RTT, and send a third-type service packet in the second half of the time period of the RTT.

It may be understood that the foregoing method for determining the first preset quantity is merely an example for description, and constitutes no limitation on embodiments of this application. In some other embodiments, the first preset quantity may alternatively be determined in another manner. Details are not described herein again.

It can be learned that, in this implementation, if the response packet needs to be obtained, the sending device may send the first preset quantity of second-type service packets, to ensure that the receiving device can receive the second-type service packet at a specific packet loss rate. This ensures that the sending device can receive the response packet in a timely manner.

It may be understood that the implementation 1 and the implementation 2 are merely examples for description, and constitute no limitation on implementations of embodiments of this application. Embodiments of this application may include another implementation.

Implementation 3: Before the sending device needs to obtain a response packet next time, the sending device may continuously send a second-type service packet to the receiving device.

Meanings of blocks, values in the blocks, and an arrow in FIG. 3C are all as described in the embodiments shown in FIG. 3A and FIG. 3B. In this embodiment, after sending a service packet 01, a service packet 02, and a service packet 03, the sending device, for example, needs to obtain the response packet for a first time, and the sending device sends a service packet 04, a service packet 05, a service packet 06, and a service packet 07. In the scenario of this embodiment, first-type service packets include the service packet 01, the service packet 02, and the service packet 03, and the first value is 0. Second-type service packets include the service packet 04, the service packet 05, the service packet 06, and the service packet 07, and the second value is 1. Further, after sending the service packet 04, the service packet 05, the service packet 06, and the service packet 07, the sending device, for example, needs to obtain the response packet for a second time, and a service packet subsequently sent by the sending device includes a service packet 08. Correspondingly, in this embodiment, first-type service packets include the service packet 04, the service packet 05, the service packet 06, and the service packet 07, and the first value is 1. In this embodiment, the second-type service packet includes the service packet 08, and the second value is 0.

It should be noted that FIG. 3C is described by using an example in which a response packet request field is one bit. Therefore, a value of a response packet request field in the service packet 08 in FIG. 3C is reset to 0. In some embodiments, if the response packet request field is greater than one bit, each time after determining that the response packet needs to be obtained, the sending device sets a value of a response packet request field in the second-type service packet for this round to be different from a value of a response packet request field in the first-type service packet for this round. This is not limited in this application.

Meanings of blocks, values in the blocks, an arrow, service packets, and time points at which response packets need to be obtained in FIG. 3D are all as described in the embodiment shown in FIG. 3C. In this embodiment, a response packet request field is, for example, two bits. Based on this, before the sending device needs to obtain a response packet for a first time, values of response packet request fields in a service packet O1, a service packet 02, and a service packet 03 are all 00. After determining that a response packet needs to be obtained for a first time, the sending device sends a service packet 04, a service packet 05, a service packet 06, and a service packet 07. Values of response packet request fields in the service packet 04, the service packet 05, the service packet 06, and the service packet 07 are all 0 1. After the sending device needs to obtain the response packet for a second time, service packets sent by the sending device include a service packet 08. A value of a response packet request field in the service packet 08 is 10.

In addition, in this implementation, second-type service packets include all service packets after the response packet needs to be obtained for one time and before the response packet needs to be obtained next time. In this way, the receiving device can receive the second-type service packet, and the sending device can receive the response packet in a timely manner.

It may be understood that FIG. 3A to FIG. 3D are merely examples for description, and constitute no limitation on implementations of this application. In some other embodiments, both a quantity of first-type service packets sent by the sending device and a quantity of second-type service packets sent by the sending device may be different from those described above. In addition, in some other implementation scenarios, a first value and a second value may alternatively be different from those in the foregoing examples. Details are not described herein again.

Step S13: The receiving device sends at least one response packet for the second-type service packet to the sending device.

The "at least one response packet for the second-type service packet" is a response packet sent in response to a trigger of the second-type service packet.

In an actual implementation, after receiving the service packet, the receiving device may read the value of the response packet request field in the service packet, and then compare the value with the value of the response packet request field in the received first-type service packet. If the two values are the same, the receiving device does not return the response packet to the sending device. If the two values are different, the receiving device generates and sends at least one response packet to the sending device. For example, with reference to the foregoing embodiments shown in FIG. 3A to FIG. 3D, the receiving device generates at least one response packet after receiving the second-type service packet. The receiving device does not generate the response packet after receiving a third-type service packet.

It can be learned from a reliable transmission response mechanism that, the receiving device may determine a receiving status of the service packet based on a sequence number of the service packet. Based on this, in some embodiments, if the receiving device successfully receives all service packets before generating the response packet, the receiving device generates an ACK packet as the response packet. The ACK packet includes a sequence number. The sequence number is a sequence number of a first service packet to be received by the receiving device. In some other embodiments, if the receiving device does not receive at least one service packet before generating the response packet, the receiving device generates a NACK packet as the response packet. The NACK packet includes sequence numbers of all service packets that are not received.

The following describes implementations of step S13 by using examples with reference to the foregoing description of the response packet.

Implementation 1: The receiving device generates one response packet for the second-type service packet.

For example, after receiving the second-type service packet, the receiving device may detect whether all service packets from the at least one first-type service packet in step S11 to the second-type service packet are successfully received, and generate an ACK packet or a NACK packet based on a detection result. Then, the receiving device sends the generated response packet to the sending device. Optionally, the receiving device may send the response packet to the sending device after receiving a first second-type service packet.

For example, with reference to the embodiment corresponding to any one of FIG. 3A to FIG. 3D, the receiving device determines that the response packet needs to be sent to the sending device after receiving the service packet 04. Then the receiving device determines, based on sequence numbers of service packets, whether the service packet 01, the service packet 02, the service packet 03, and the service packet 04 are successfully received. If the service packet 01, the service packet 02, and the service packet 03 are successfully received, the receiving device generates an ACK packet as the response packet. A sequence number included in the ACK packet is the same as a sequence number of the service packet 05. Then the receiving device sends the ACK packet to the sending device. If the service packet 01 and the service packet 03 are not received, the receiving device generates a NACK packet as the response packet. The NACK packet includes a sequence number of the service packet 01 and a sequence number of the service packet 03. Then the receiving device sends the NACK packet to the sending device.

In this implementation, the receiving device can respond to a change in the value of the response packet request field in the service packet, to send only one response packet corresponding to a plurality of service packets. This can reduce resources used by the receiving device to generate the response packet.

Similar to the service packet, the response packet may also be lost in a sending process. Therefore, as the receiving device sends only one response packet to the sending device in the implementation 1, the sending device may fail to receive the response packet if the response packet is lost. To resolve the problem, this step may alternatively be implemented by using the following implementations in this embodiment of this application.

Implementation 2: The receiving device generates at least two response packets for the second-type service packet, where the at least two response packets include same content.

For example, in this implementation, the receiving device may still generate only one response packet after receiving the second-type service packet. Then the receiving device sends the response packet to the sending device at least twice. This can ensure that the sending device receives the response packet. In this implementation, for a manner in which the receiving device generates the response packet, refer to the description in the implementation 1. Details are not described herein again.

It should be noted that, in this implementation, a quantity of times of sending the response packet to the sending device by the receiving device may be determined by a person skilled in the art based on the packet loss rate, to ensure that the sending device can receive at least one response packet. For example, the receiving device sends the response packet to the sending device three times.

Implementation 3: The receiving device generates at least two response packets for the second-type service packet. In this embodiment, the at least two response packets include different content.

For example, in this implementation, after receiving a first second-type service packet, the receiving device may generate a first response packet for the first second-type service packet, and then send the first response packet to the sending device. After receiving a second second-type service packet, the receiving device may generate a second response packet for the second second-type service packet, and then send the second response packet to the sending device. The rest can be done in the same manner. For a manner in which the sending device generates the response packet for each second-type service packet, refer to the related description in the implementation 1 of this step. Details are not described herein again.

In some embodiments, if the receiving device receives a first second-type service packet and all packets before the first second-type service packet, the receiving device generates a first ACK packet, where a sequence number included in the first ACK packet is the same as a sequence number of a second second-type service packet. Similarly, if the receive device successfully receives a second second-type service packet and all packets before the second second-type service packet, the receiving device generates a second ACK packet, where a sequence number included in the second ACK packet is the same as a sequence number of a third second-type service packet.

For example, with reference to the embodiment corresponding to any one of FIG. 3B to FIG. 3D, after receiving the service packet 04, the receiving device determines that the service packet O1, the service packet 02, the service packet 03, and the service packet 04 are successfully received. Then the receiving device generates a first ACK packet as the response packet. A sequence number included in the first ACK packet is the same as a sequence number of the service packet 05. Then the receiving device sends the first ACK packet to the sending device. After receiving the service packet 05, the receiving device determines that the service packet 01, the service packet 02, the service packet 03, the service packet 04, and the service packet 05 are successfully received. Then the receiving device generates a second ACK packet as the response packet. A sequence number included in the second ACK packet is the same as a sequence number of the service packet 06. Then the receiving device sends the second ACK packet to the sending device.

It may be understood that the implementation described in this step is merely an example for description, and constitutes no limitation on embodiments of this application. In some other embodiments, the receiving device may further send the response packet in another manner. In addition, a quantity of response packets sent by the receiving device in the implementation 2 and the implementation 3 may also be flexibly set. Details are not described herein again.

In conclusion, the service packet in this application includes the response packet request field, and the sending device can set the value of the response packet request field in the sent service packet. When the sending device needs the receiving device to send a response packet, the sending device changes the value of the response packet request field in the service packet to be sent, so that the value of the response packet request field in the service packet to be sent is at least different from a value of a response packet request field in a previously sent service packet. After receiving the service packet, if the receiving device determines that a value of a response packet request field in a received service packet is different from a value of a response packet request field in a last received service packet, the receiving device generates and sends the response packet to the sending device. In this way, the receiving device can send the response packet to the sending device based on a requirement of the sending device, to reduce a quantity of response packets and save resources while ensuring transmission reliability.

It should be noted that the foregoing method 10 is applicable to any reliable transmission implementation scenario, for example, a wireless network implementation scenario, a segmented network implementation scenario, and an end-to-end implementation scenario.

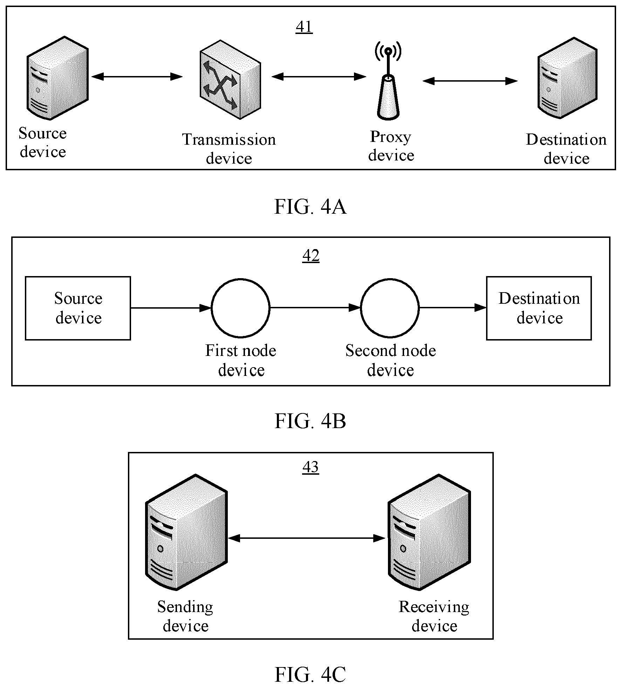

FIG. 4A is a schematic diagram of a scenario of a wireless network architecture 41. The wireless network architecture 41 includes, for example, a source device, a transmission device, a proxy device, and a destination device. The proxy device is separately connected to the source device and the destination device. The proxy device may be configured to receive a service packet from the source device via the transmission device, and may be further configured to send a response packet to the source device at a normal frequency via the transmission device. The proxy device is configured to: set a response packet request field for the received service packet, set a value of the response packet request field, and then send, to the destination device, the service packet in which the response packet request field is set. The proxy device is further configured to receive a response packet that is sent by the destination device in response to a requirement of the proxy device. In some embodiments, the proxy device may send the response packet to the source device based on the conventional technology.

It can be learned that in this embodiment, the proxy device may be configured to implement functions of the sending device in the embodiment of the method 10, and the destination device may be configured to implement functions of the receiving device in the embodiment of the method 10. Based on this, for details about an embodiment related to information exchange between the proxy device and the destination device, refer to the descriptions of the method 10. Details are not described herein again.

In an implementation shown in FIG. 4A, the destination device feeds back the response packet based on the requirement of the proxy device, to save resources of the destination device. In addition, in this embodiment, the proxy device sets the response packet request field for the service packet, so that a transmission protocol stack of the source device does not need to be modified.

FIG. 4B is a schematic diagram of a scenario of a segmented network architecture 42. The segmented network architecture 42 includes a source device, a first node device, a second node device, and a destination device that are sequentially connected. A network between the source device and the destination device includes a network segment from the source device to the first node device, a network segment from the first node device to the second node device, and a network segment from the second node device to the destination device. In a process in which the source device sends a service packet to the destination device, the service packet is sent to the destination device via the first node device and the second node device. In addition, in a service packet transmission process, the first node device sends a response packet to the source device. The second node device sends a response packet to the first node device. The destination device sends a response packet to the second node device.

Based on this, in this embodiment, an upstream node of each network segment may be configured to implement functions of the sending device in the embodiment of the method 10, and a downstream node of the corresponding network segment may be configured to implement functions of the receiving device in the embodiment of the method 10. Each network segment is applicable to the embodiment described in the method 10.

Resources of each node device in the segmented network are limited. Based on this, in this implementation, each node device feeds back a response packet only when an upstream node device of the node device needs the response packet. This can reduce resources occupied for generating the response packet, and reduce transmission resources of the entire network because of a decrease in a total quantity of response packets that need to be transmitted in the entire network.

FIG. 4C is a schematic diagram of a scenario of an end-to-end network architecture 43. The end-to-end network architecture 43 includes a sending device and a receiving device. In this embodiment, the sending device may be configured to implement functions of the sending device in the embodiment of the method 10, and the receiving device may be configured to implement functions of the receiving device in the embodiment of the method 10.

In an embodiment shown in FIG. 4C, the sending device manages, for example, a congestion control protocol related to a transmission protocol. The sending device usually adjusts a congestion control algorithm based on a quantity of service packets corresponding to a response packet. For example, each time the receiving device receives two service packets, the receiving device generates one response packet corresponding to the two service packets. The response packet described in this application corresponds to two service packets. Further, for example, each time the sending device receives one response packet, the sending device increases a congestion window by i bytes. i is an integer greater than or equal to 1. A specific value of i varies with different implementation scenarios. In this embodiment of this application, one response packet may correspond to a plurality of service packets. For example, one response packet corresponds to 100 service packets. Each time the sending device receives one response packet, the sending device may increase the congestion window by 50i bytes. Similarly, if one response packet corresponds to 80 service packets, each time the sending device receives one response packet, the sending device may increase the congestion window by 40i bytes. The rest can be deduced by analogy, and details are not described herein.

The following uses a segmented network implementation scenario as an example to describe the packet transmission method in this application.

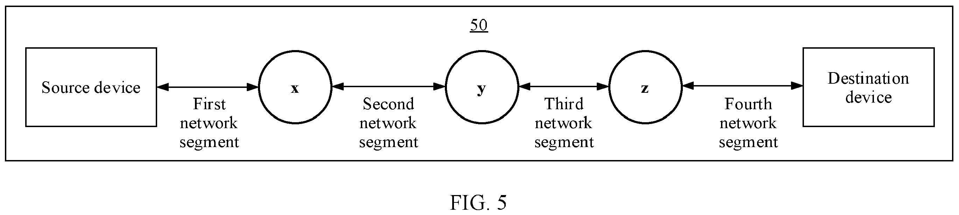

As shown in FIG. 5, a segmented network architecture 50 includes a source device m, a node device x, a node device y, a node device z, and a destination device n that are sequentially connected. A network from the source device m to the destination device n includes a first network segment formed by the source device m and the node device x, a second network segment formed by the node device x and the node device y, a third network segment formed by the node device y and the node device z, and a fourth network segment formed by the node device z and the destination device n. A service packet sent by the source device m to the destination device n arrives at the destination device n through the first network segment, the second network segment, the third network segment, and the fourth network segment. In a service packet transmission process, an upstream node device in each network segment sends the service packet to a downstream node device in the network segment, and a downstream node device in the network segment sends a response packet to the upstream node device in the network segment. The segmented network architecture 50 supports, for example, a TCP transmission protocol.

It may be understood that FIG. 5 is an example for description, and constitute no limitation on the technical solutions of this application. In some other embodiments, the segmented network may include more or fewer node devices. The segmented network may include more or fewer network segments. Details are not described herein.

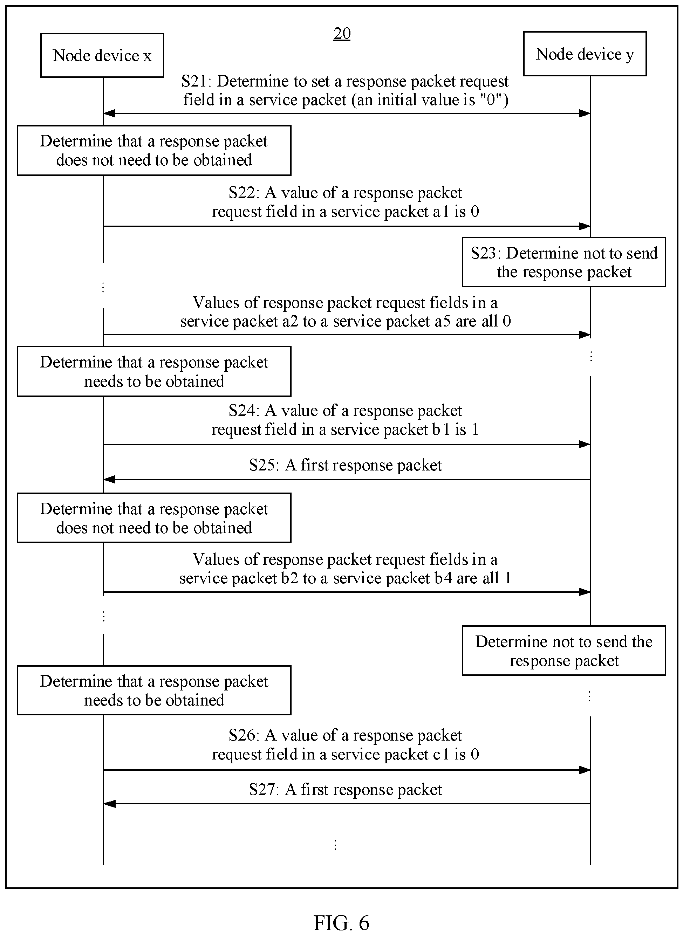

FIG. 6 is a signaling interaction diagram of a packet transmission method 20 according to this application. The packet transmission method 20 (referred to as the method 20) is, for example, applied to the second network segment in FIG. 5.

The method 20 includes the following steps.

Step S21: The node device x and the node device y determine to set a response packet request field in a service packet.

For example, the node device x and the node device y determine, through a TCP three-way handshake, to set the response packet request field in the service packet. Details of the TCP three-way handshake performed by the node device x and the node device y are not described herein again.

In this embodiment, the response packet request field is, for example, one bit. The node device x may further determine that an initial value of the response packet request field is 0.

Then the node device x receives the service packet from the source device m, and then the node device x performs the following steps.

Step S22: The node device x determines that no response packet needs to be obtained, and sends a service packet a1 to the node device y, where a value of a response packet request field in the service packet a1 is 0.

For example, the node device x determines, based on whether a retransmission queue needs to be cleared, whether a response packet needs to be obtained. In this embodiment, a condition for clearing the retransmission queue is, for example, that a total quantity of service packets in the retransmission queue reaches 5. A current total quantity of service packets in the retransmission queue is, for example, 0. The node device x determines that the response packet does not need to be obtained.

The service packet a1 is, for example, a first service packet sent by the node device x to the node device y. After sending the service packet a1 to the node device y, the node device x adds the service packet a1 to the retransmission queue. Based on this, the total quantity of service packets in the retransmission queue is 1 after step S22.

Step S23: The node device y determines that a value of a response packet request field in the service packet a1 is the same as a value of a response packet request field in a previous service packet received by the node device y, and does not send the response packet to the node device x.

The service packet a1 is, for example, a first service packet received by the node device y. Therefore, the node device y has not received any service packet before. In this embodiment, the node device y does not send the response packet to the node device x. Correspondingly, the value of the response packet request field in the previous service packet received by the node device y may be considered as 0.

Further, as shown in FIG. 6, the node device x, for example, continues to send a service packet a2, a service packet a3, a service packet a4, and a service packet a5 to the node device y. Similar to step S22, each time before sending one service packet, the node device x detects whether the response packet needs to be obtained. When the node device x sends the service packet a2, the service packet a3, the service packet a4, and the service packet a5, the total quantity of service packets in the retransmission queue is less than 5. Therefore, in the foregoing scenario, the node device x does not need to obtain the response packet. Values of response packet request fields in the service packet a2, the service packet a3, the service packet a4, and the service packet a5 are all 0. Details are not described herein again.

Each time the node device y receives one of the service packet a2, the service packet a3, the service packet a4, and the service packet a5, the node device y reads the value of the response packet request field in the one service packet. Then the node device y compares the value of the response packet request field in the one service packet with the value of the response packet request field in the previous service packet received by the node device y, to determine whether the values are the same. For the service packet a1 to the service packet a5, the values of the response packet request fields are all 0, in other words, a value of a response packet request field in a current service packet is the same as a value of a response packet request field in a previous service packet. Therefore, the node device y may not send the response packet to the node device x for the service packet a1 to the service packet a5.

Step S24: The node device x determines that a response packet needs to be obtained, and sends a service packet b 1 to the node device y, where a value of a response packet request field in the service packet b 1 is 1.

Further, after the service packet a5 is sent, the total quantity of service packets in the retransmission queue reaches 5, and the node device x needs to clear the retransmission queue. Therefore, the node device x needs to obtain the response packet. Further, the node device x determines that the value of the response packet request field in the service packet b1 is 1.

Step S25: The node device y determines that the value of the response packet request field in the service packet b1 is different from the value of the response packet request field in the service packet a5, and sends a first response packet to the node device x.

In this embodiment, after receiving the service packet b1, the node device y detects, for example, based on sequence numbers of the service packets, whether the service packet a1 to the service packet b1 are successfully received. If the service packet a1 to the service packet b1 are successfully received, a first ACK packet is generated. The first ACK packet includes a sequence number of a service packet b2. If some service packets are not received, for example, the service packet a3 is not received, a first NACK packet is generated. The first NACK packet includes a sequence number of a service packet a3.

If receiving the first ACK packet, the node device x clears all service packets from the retransmission queue. The total quantity of service packets in the retransmission queue is 0 again. If receiving the first NACK packet, the node device x clears all service packets except the service packet a3 from the retransmission queue. The total quantity of service packets in the retransmission queue changes into 1.

In this embodiment, the node device y sends one response packet to the node device x. In another implementation, the node device y may send the response packet to the node device x multiple times. Details are not described herein again.

Then the node device x determines, based on a latest value of the total quantity of service packets in the retransmission queue, that the response packet does not need to be obtained, and may continue to send the service packet b2, the service packet b3, and the service packet b4. The values of the response packet request fields in the service packet b2, the service packet b3, and the service packet b4 are all 1.

Similarly, after receiving any one of the service packet b2, the service packet b3, and the service packet b4, the node device y compares a value of a response packet request field in the received service packet with a value of a response packet request field in a previous service packet. Because a comparison result is that the values are the same, no response packet is sent.

Step S26: The node device x determines that the response packet needs to be obtained, and sends a service packet c1 to the node device y, where a value of a response packet request field in the service packet c1 is 0.

For example, after sending a service packet b5, the node device x needs to clear the retransmission queue, and needs to obtain a response packet. Then the node device x generates a service packet c1.

It should be noted that FIG. 6 is described by using an example in which a response packet request field is one bit. Therefore, a value of a response packet request field in the service packet c 1 is 0. In an actual implementation, if the response packet request field is greater than one bit, the value of the response packet request field in the service packet c1 may be different from a value of a response packet request field in any one of the service packet a1 to the service packet b5. For example, FIG. 3D shows an embodiment.

Step S27: The node device y determines that the value of the response packet request field in the service packet c1 is different from a value of a response packet request field in a previous service packet, and sends a second response packet to the node device x.

In this step, the previous service packet received by the node device y is, for example, the service packet b5. A value of a response packet request field in the service packet b5 is 1.

In this step, the node device y detects whether all service packets from the service packet b2 to the service packet c1 are successfully received, and then generates the second response packet based on a detection result. Details are not described herein again.

Further, a subsequent signaling interaction process between the node device x and the node device y is similar to that described in step S22 to step S27. Details are not described herein again.

FIG. 6 is described merely by using the second network segment in FIG. 5 as an example. This embodiment is further applicable to another network segment in FIG. 5. Certainly, a same device performs different functions in different network segments. For example, in the embodiment shown in FIG. 6, the node device x is used as a sending device, and therefore performs functions of the sending device. If being used as a receiving device in the first network segment, the node device x performs functions of the receiving device (that is, the node device y in FIG. 6). Similarly, in the embodiment shown in FIG. 6, the node device y is used as a receiving device, and therefore performs functions of the receiving device. If being used as a sending device in the third network segment, the node device y performs functions of the sending device (that is, the node device x in FIG. 6).

It may be understood that the packet transmission method in FIG. 6 is an example for description, and constitutes no limitation on the packet transmission method of this application. In some other embodiments, for example, the receiving device may send a plurality of response packets to the sending device. For details, refer to the description of the foregoing embodiment, and details are not described herein again.

In addition, the operation manner shown in FIG. 6 is not only applicable to a segmented network implementation scenario, but also applicable to another reliable transmission scenario, for example, a wireless network or an end-to-end scenario. For a specific implementation of another implementation scenario, refer to the descriptions in the foregoing embodiments. Details are not described herein again.

It can be learned that in embodiments of this application, the service packet includes the response packet request field, and the sending device can set the value of the response packet request field in the sent service packet. When the sending device needs the receiving device to send a response packet, the sending device changes the value of the response packet request field in the service packet to be sent, so that the value of the response packet request field in the service packet to be sent is at least different from a value of a response packet request field in a previously sent service packet. After receiving the service packet, if the receiving device determines that a value of a response packet request field in a received service packet is different from a value of a response packet request field in a last received service packet, the receiving device generates and sends the response packet to the sending device. In this way, the receiving device can send the response packet to the sending device based on a requirement of the sending device, to reduce a quantity of response packets and save resources while ensuring transmission reliability.

In the foregoing embodiments, the packet transmission method provided in embodiments of this application is separately described from a perspective of the devices and from a perspective of interaction between the devices. For example, to implement the foregoing functions, the devices include corresponding hardware structures and/or software modules for performing the functions. A person skilled in the art should be easily aware that, in combination with the examples of units and algorithm steps described in embodiments disclosed in this specification, this application can be implemented by hardware or a combination of hardware and computer software. Whether a function is performed by hardware or hardware driven by computer software depends on particular applications and design constraints of the technical solutions..

For example, the sending device may implement the corresponding functions by using function modules. For example, the sending device may include a sending module, a receiving module, and a processing module. The sending module may be configured to send the service packet in the foregoing method 10 and method 20. The receiving module may be configured to receive the response packet in the foregoing method 10 and method 20. The processing module may be configured to perform operations except receiving and sending a packet in the foregoing method 10 and method 20, for example, determining whether the response packet needs to be obtained.

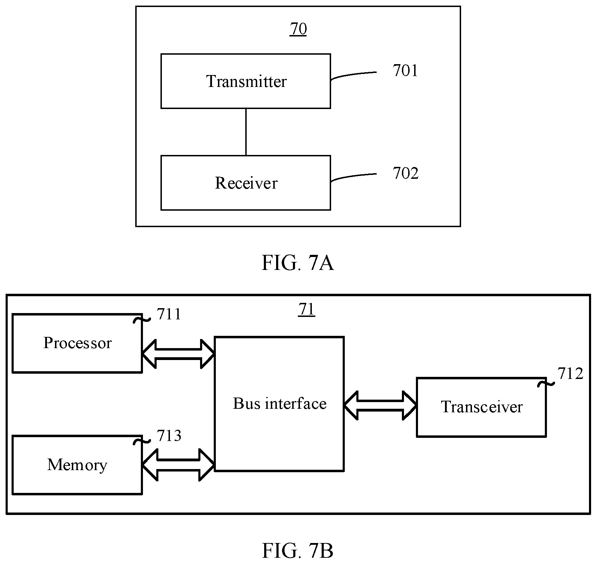

It may be understood that division into the foregoing modules is merely logical function division. In an actual implementation, a function of the sending module may be integrated into a transmitter, and a function of the receiving module may be integrated into a receiver. FIG. 7A is a schematic diagram of a structure of a sending device 70 according to this application. The sending device 70 includes a transmitter 701 and a receiver 702. The transmitter 701 may send the service packet in the foregoing method 10 and method 20. The receiver 702 may receive the response packet in the foregoing method 10 and method 20.

For example, in an embodiment, the transmitter 701 may be configured to send at least one first-type service packet to a receiving device. A value of a response packet request field in the first-type service packet is a first value. The response packet request field indicates whether the receiving device sends a response packet to the sending device. If the response packet needs to be obtained, the transmitter 701 may be further configured to send at least one second-type service packet to the receiving device. A value of a response packet request field in the second-type service packet is a second value. The receiver 702 may be configured to receive at least one response packet for the second-type service packet from the receiving device.

In another embodiment, the sending device 70 may further include a processor. The processor may be configured to perform operations except receiving and sending a packet in the foregoing method 10 and method 20, for example, determining whether the response packet needs to be obtained.

For specific content, refer to descriptions of related parts in the embodiment in the foregoing method 10 and method 20. Details are not described herein again.

FIG. 7A describes a sending device in this application from a perspective of an independent functional entity. In another implementation scenario, all function entities that run independently may be integrated into one hardware entity, for example, a chip. As shown in FIG. 7B, in this implementation scenario, the sending device 71 may include a processor 711, a transceiver 712, and a memory 713. The memory 713 may be configured to store a program/code pre-installed on the sending device 71, or may store code or the like used for execution by the processor 711.

It should be understood that the sending device 71 in this application may correspond to the sending device in the corresponding embodiments of the method 10 and the method 20 in this application. The transceiver 712 is configured to receive and send the packet in the corresponding embodiments of the method 10 and the method 20. The processor 711 is configured to perform processing except receiving and sending a packet by the sending device in the corresponding embodiments of the method 10 and the method 20. Details are not described herein.

For example, the receiving device may implement the corresponding functions by using function modules. For example, the receiving device may include a sending module, a receiving module, and a processing module. The sending module may be configured to send the response packet in the foregoing method 10 and method 20. The receiving module may be configured to receive the service packet in the foregoing method 10 and method 20. The processing module may be configured to perform operations except receiving and sending a packet in the foregoing method 10 and method 20, for example, comparing whether values of response packet request fields in two service packets are the same.

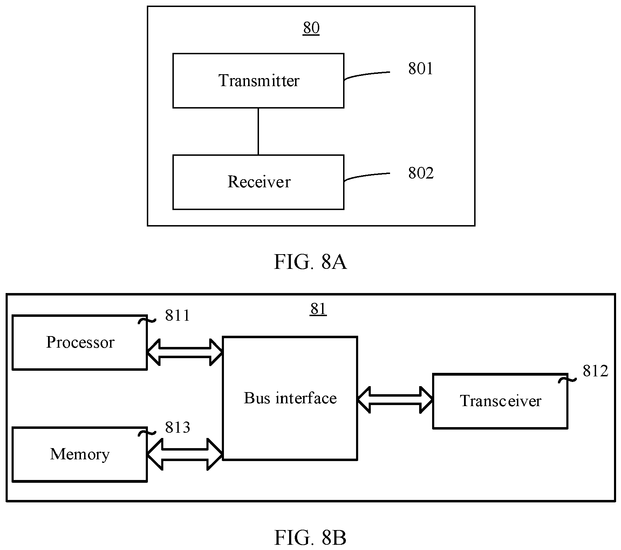

It may be understood that division into the foregoing modules is merely logical function division. In an actual implementation, a function of the sending module may be integrated into a transmitter, and a function of the receiving module may be integrated into a receiver. FIG. 8A is a schematic diagram of a structure of a receiving device 80 according to this application. The receiving device 80 includes a transmitter 801 and a receiver 802. The transmitter 801 may send the response packet in the foregoing method 10 and method 20. The receiver 802 may receive the service packet in the foregoing method 10 and method 20.

For example, in an embodiment, the receiver 802 may be configured to receive at least one first-type service packet from a sending device. A value of a response packet request field in the first-type service packet is a first value. The response packet request field indicates whether the receiving device sends a response packet to the sending device. The receiver 802 may be further configured to receive at least one second-type service packet from the sending device where a value of a response packet request field in the second-type service packet is a second value. The transmitter 801 may be configured to send at least one response packet for the second-type service packet to the sending device.

For specific content, refer to descriptions of related parts in the embodiment in the foregoing method 10 and method 20. Details are not described herein again.

FIG. 8A describes a sending device in this application from a perspective of an independent functional entity. In another implementation scenario, all function entities that run independently may be integrated into one hardware entity, for example, a chip. As shown in FIG. 8B, in this implementation scenario, the receiving device 81 may include a processor 811, a transceiver 812, and a memory 813. The memory 813 may be configured to store a program/code pre-installed on the receiving device 81, or may store code or the like used for execution by the processor 811.

It should be understood that the receiving device 81 in this application may correspond to the receiving device in the corresponding embodiments of the method 10 and the method 20 in this application. The transceiver 812 is configured to receive and send the packet in the corresponding embodiments of the method 10 and the method 20. The processor 811 is configured to perform processing except receiving and sending a packet by the receiving device in the corresponding embodiments of the method 10 and the method 20. Details are not described herein.

In a specific implementation, corresponding to the sending device and the receiving device, this application further provides a computer storage medium. The computer storage medium disposed in any device may store a program. When the program is executed, some or all of the steps of the embodiments including the packet transmission method provided in the method 10 and the method 20 may be implemented. A storage medium in any device may be a magnetic disk, an optical disc, a read-only memory (read-only memory, ROM), a random access memory (random access memory, RAM), or the like.

The transceiver in this application may be a wired transceiver, a wireless transceiver, or a combination thereof. The wired transceiver may be, for example, an Ethernet interface. The Ethernet interface may be an optical interface, an electrical interface, or a combination thereof. The wireless transceiver may be, for example, a wireless local area network transceiver, a cellular network transceiver, or a combination thereof. The processor may be a central processing unit (central processing unit, CPU), a network processor (network processor, NP), or a combination of the CPU and the NP. The processor may further include a hardware chip. The foregoing hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. The memory may include a volatile memory (volatile memory), for example, a random access memory (random-access memory, RAM); the memory may include a non-volatile memory (non-volatile memory), for example, a read-only memory (read-only memory, ROM), a flash memory (flash memory), a hard disk drive (hard disk drive, HDD), or a solid-state drive (solid-state drive, SSD); and the memory may further include a combination of the foregoing types of memories.

In FIG. 7B and FIG. 8B, a bus interface may be further included. The bus interface may include any quantity of interconnected buses and bridges that are specifically connected together by circuits that are of one or more processors represented by the processor and of a memory represented by the memory. The bus interface may further link together various other circuits, such as a peripheral device, a voltage regulator, and a power management circuit. This is well known in the art, and therefore is not further described in this specification. The bus interface provides an interface. The transceiver provides a unit configured to communicate with various other devices on a transmission medium. The processor is responsible for bus architecture management and general processing. The memory may store data used when the processor performs an operation.

A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of an entire system.

The various illustrative logical units and circuits described in embodiments of this application may implement or operate the described functions through a general-purpose processor, a digital signal processor, an application-specific integrated circuit (ASIC), a field programmable gate array (FPGA), another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

Steps of the methods or algorithms described in embodiments of this application may be directly embedded into hardware, a software unit executed by a processor or a combination thereof. The software unit may be stored in a RAM, a flash memory, a ROM, an EPROM, an EEPROM, a register, a hard disk drive, a removable magnetic disk, a CD-ROM, or a storage medium of any other form in the art. For example, the storage medium may connect to a processor, so that the processor can read information from the storage medium and write information into the storage medium. Optionally, the storage medium may be integrated into a processor. The processor and the storage medium may be arranged in the ASIC, and the ASIC may be arranged in an electronic device. Optionally, the processor and the storage medium may be arranged in different components of the electronic device.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, all or some of the procedures or functions in this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or packet center to another website, computer, server, or packet center in a wired (for example, a coaxial cable, an optical fiber, or a digital subscriber line (DSL)) or wireless (for example, infrared, radio, or microwave) manner. The computer-readable storage medium may be any usable medium accessible by a computer, or a packet storage device, such as a server or a packet center, integrating one or more usable media. The usable medium may be a magnetic medium (for example, a floppy disk, a hard disk, or a magnetic tape), an optical medium (for example, a DVD), a semiconductor medium (for example, a solid-state drive (solid state drive, SSD)), or the like.

The parts in this specification are all described in a progressive manner, for same or similar parts in the embodiments, refer to these embodiments, and each embodiment focuses on a difference from other embodiments. Especially, apparatus and system embodiments are basically similar to a method embodiment, and therefore are described briefly; for related parts, refer to partial descriptions in the method embodiment.

## Claims

1. A packet transmission method, comprising:
sending, by a sending device (70), at least one first-type service packet to a receiving device (80), wherein a value of a response packet request field in the first-type service packet is a first value, and the response packet request field indicates whether the receiving device (80) sends a response packet to the sending device (70), wherein the service packet includes a to-be-sent data packet and services that need to be executed during a data packet transmission;
if the response packet needs to be obtained, sending, by the sending device (70), at least one second-type service packet to the receiving device (80), wherein a value of a response packet request field in the second-type service packet is a second value,
wherein the second value of the response packet request field in the second-type service packet is different from the first value of the response packet request field in the first-type service packet in order to trigger the receiving device (80) to send the response packet, and
wherein the sending device (70) sends the second-type service packet within a first preset time period which is less than one round trip time, RTT, the RTT is total duration from a time point when the sending device (70) sends a service packet to a time point when the sending device (70) receives a response packet (80) corresponding to the service packet from the receiving device (80); and
receiving, by the sending device (70), at least one response packet for the second-type service packet from the receiving device (80), wherein the response packet is a response that is about a service packet receiving status.

2. The method according to claim 1, wherein the sending, by the sending device (70), at least one second-type service packet to the receiving device (80) comprises:
sending, by the sending device (70), one second-type service packet to the receiving device (80).

3. The method according to claim 1, wherein the sending, by the sending device (70), at least one second-type service packet to the receiving device (80) comprises:
sending, by the sending device (70), a first preset quantity of second-type service packets to the receiving device (80), wherein the first preset quantity is an integer greater than or equal to 2.

4. The method according to claim 1, wherein the sending, by the sending device (70), at least one second-type service packet to the receiving device (80) comprises:
before the sending device (70) needs to obtain the response packet next time, continuously sending, by the sending device (70), the second-type service packet to the receiving device (80).

5. The method according to claim 2 or 3, wherein after the sending, by the sending device (70), at least one second-type service packet to the receiving device (80), and before the sending device (70) needs to obtain the response packet next time, the method further comprises:
Sending, by the sending device (70), at least one third-type service packet to the receiving device (80), wherein a value of a response packet request field in the third-type service packet is a third value; and the third value is different from the second value.

6. The method according to any one of claims 1 to 5, after the sending, by a sending device (70), at least one first-type service packet to a receiving device (80), and before the sending, by the sending device (70), at least one second-type service packet to the receiving device (80), the method further comprises:
detecting, by the sending device (70), whether timing of the round trip time, RTT, ends; and
if timing of the RTT ends, determining, by the sending device (70), that the response packet needs to be obtained.

7. A packet transmission method, comprising:
receiving, by a receiving device (80), at least one first-type service packet from a sending device (70), wherein a value of a response packet request field in the first-type service packet is a first value, and the response packet request field indicates whether the receiving device (80) sends a response packet to the sending device (70), wherein the service packet includes a to-be-sent data packet and services that need to be executed during a data packet transmission;
receiving, by the receiving device (80), at least one second-type service packet from the sending device (70), wherein a value of a response packet request field in the second-type service packet is a second value,
wherein the second value of the response packet request field in the second-type service packet is different from the first value of the response packet request field in the first-type service packet in order to trigger the receiving device (80) to send the response packet, and
wherein the sending device (70) sends the second-type service packet within a first preset time period which is less than one round trip time, RTT, the RTT is total duration from a time point when the sending device (70) sends a service packet to a time point when the sending device (70) receives a response packet corresponding to the service packet from the receiving device (80); and
sending, by the receiving device (80), at least one response packet for the second-type service packet to the sending device (70), wherein the response packet is a response that is about a service packet receiving status.

8. The method according to claim 7, wherein the sending, by the receiving device (80), at least one response packet for the second-type service packet to the sending device (70) comprises:
sending, by the receiving device (80), one response packet for the second-type service packet to the sending device (70).

9. The method according to claim 7, wherein the sending, by the receiving device (80), at least one response packet for the second-type service packet to the sending device (70) comprises:
Sending, by the receiving device (80), the at least one response packet twice to the sending device (70).

10. The method according to claim 7, wherein the sending, by the receiving device (80), at least one response packet for the second-type service packet to the sending device (70) comprises:
sending, by the receiving device (80), the at least one response packet for a first second-type service packet and the at least one response packet for a second second-type service packet, wherein the at least one response packet for both the first and second second-type service packet comprise different content.

11. A sending device (70), comprising a transmitter (701) and a receiver (702), wherein
the transmitter (701) is configured to send at least one first-type service packet to a receiving device (80), wherein a value of a response packet request field in the first-type service packet is a first value, and the response packet request field indicates whether the receiving device (80) sends a response packet to the sending device (70), wherein the service packet includes a to-be-sent data packet and services that need to be executed during a data packet transmission;
the transmitter (701) is further configured to: if the response packet needs to be obtained, send at least one second-type service packet to the receiving device (70), wherein a value of a response packet request field in the second-type service packet is a second value,
wherein the second value of the response packet request field in the second-type service packet is different from the first value of the response packet request field in the first-type service packet in order to trigger the receiving device (80) to send the response packet, and
wherein the sending device (70) sends the second-type service packet within a first preset time period which is less than one round trip time, RTT, the RTT is total duration from a time point when the sending device (70) sends a service packet to a time point when the sending device (70) receives a response packet corresponding to the service packet from the receiving device (80); and
the receiver is configured to receive at least one response packet for the second-type service packet from the receiving device (80), wherein the response packet is a response that is about a service packet receiving status.

12. The sending device according to claim 11, wherein
the transmitter (701) is further configured to send one second-type service packet to the receiving device (80).

13. The sending device according to claim 11, wherein the sending, by the sending device (70), at least one second-type service packet to the receiving device (80) comprises:
the transmitter (701) is further configured to send a first preset quantity of second-type service packets to the receiving device (80), wherein the first preset quantity is an integer greater than or equal to 2.

14. The sending device according to claim 11, wherein
the transmitter (701) is further configured to: before the sending device (70) needs to obtain the response packet next time, continuously send the second-type service packet to the receiving device (80).

15. The sending device according to claim 12 or 13, wherein
the transmitter (701) is further configured to: after sending at least one second-type service packet to the receiving device (80), and before the sending device (70) needs to obtain the response packet next time, send at least one third-type service packet to the receiving device (80), wherein a value of a response packet request field in the third-type service packet is a third value; and the third value is different from the second value.

## Patentansprüche

1. Paketübertragungsverfahren, umfassend:
Senden, durch eine Sendevorrichtung (70), mindestens eines Dienstpakets eines ersten Typs an eine Empfangsvorrichtung (80), wobei ein Wert eines Antwortpaketanforderungsfelds in dem Dienstpaket des ersten Typs ein erster Wert ist, und das Antwortpaketanforderungsfeld anzeigt, ob die Empfangsvorrichtung (80) ein Antwortpaket an die Sendevorrichtung (70) sendet, wobei das Dienstpaket ein zu sendendes Datenpaket und Dienste umfasst, die während einer Datenpaketübertragung ausgeführt werden müssen;
wenn das Antwortpaket erhalten werden muss, Senden, durch die Sendevorrichtung (70), mindestens eines Dienstpakets eines zweiten Typs an die Empfangsvorrichtung (80), wobei ein Wert eines Antwortpaketanforderungsfelds in dem Dienstpaket des zweiten Typs ein zweiter Wert ist,
wobei sich der zweite Wert des Antwortpaketanforderungsfelds in dem Dienstpaket des zweiten Typs von dem ersten Wert des Antwortpaketanforderungsfelds in dem Dienstpaket des ersten Typs unterscheidet, um die Empfangsvorrichtung (80) zu veranlassen, das Antwortpaket zu senden, und
wobei die Sendevorrichtung (70) das Dienstpaket des zweiten Typs innerhalb eines ersten voreingestellten Zeitraums sendet, der kleiner als eine Umlaufzeit, RTT, ist, wobei die RTT eine Gesamtdauer ab einem Zeitpunkt, zu dem die Sendevorrichtung (70) ein Dienstpaket sendet, bis zu einem Zeitpunkt, zu dem die Sendevorrichtung (70) ein dem Dienstpaket entsprechendes Antwortpaket (80) von der Empfangsvorrichtung (80) empfängt, ist; und
Empfangen, durch die Sendevorrichtung (70), mindestens eines Antwortpakets für das Dienstpaket des zweiten Typs von der Empfangsvorrichtung (80), wobei das Antwortpaket eine Antwort ist, die einen Dienstpaketempfangsstatus betrifft.

2. Verfahren nach Anspruch 1, wobei das Senden, durch die Sendevorrichtung (70), mindestens eines Dienstpakets des zweiten Typs an die Empfangsvorrichtung (80) Folgendes umfasst:
Senden, durch die Sendevorrichtung (70), eines Dienstpakets des zweiten Typs an die Empfangsvorrichtung (80).

3. Verfahren nach Anspruch 1, wobei das Senden, durch die Sendevorrichtung (70), mindestens eines Dienstpakets des zweiten Typs an die Empfangsvorrichtung (80) Folgendes umfasst:
Senden, durch die Sendevorrichtung (70), einer ersten voreingestellten Anzahl an Dienstpaketen des zweiten Typs an die Empfangsvorrichtung (80), wobei die erste voreingestellte Anzahl eine Ganzzahl größer als oder gleich 2 ist.

4. Verfahren nach Anspruch 1, wobei das Senden, durch die Sendevorrichtung (70), mindestens eines Dienstpakets des zweiten Typs an die Empfangsvorrichtung (80) Folgendes umfasst:
bevor die Sendevorrichtung (70) das nächste Mal das Antwortpaket erhalten muss, fortlaufendes Senden, durch die Sendevorrichtung (70), des Dienstpakets des zweiten Typs an die Empfangsvorrichtung (80).

5. Verfahren nach Anspruch 2 oder 3, wobei nach dem Senden, durch die Sendevorrichtung (70), mindestens eines Dienstpakets des zweiten Typs an die Empfangsvorrichtung (80), und bevor die Sendevorrichtung (70) das nächste Mal das Antwortpaket erhalten muss, das Verfahren ferner Folgendes umfasst:
Senden, durch die Sendevorrichtung (70), mindestens eines Dienstpakets eines dritten Typs an die Empfangsvorrichtung (80), wobei ein Wert eines Antwortpaketanforderungsfelds in dem Dienstpaket des dritten Typs ein dritter Wert ist; und sich der dritte Wert von dem zweiten Wert unterscheidet.

6. Verfahren nach einem der Ansprüche 1 bis 5, wobei nach dem Senden, durch eine Sendevorrichtung (70), mindestens eines Dienstpakets des ersten Typs an eine Empfangsvorrichtung (80), und vor dem Senden, durch die Sendevorrichtung (70), mindestens eines Dienstpakets des zweiten Typs an die Empfangsvorrichtung (80), das Verfahren ferner Folgendes umfasst:
Detektieren, durch die Sendevorrichtung (70), ob eine Zeitvorgabe der Umlaufzeit, RTT, endet, und
wenn die Zeitvorgabe der RTT endet, Bestimmen, durch die Sendevorrichtung (70), dass das Antwortpaket erhalten werden muss.

7. Paketübertragungsverfahren, umfassend:
Empfangen, durch eine Empfangsvorrichtung (80), mindestens eines Dienstpakets eines ersten Typs von einer Sendevorrichtung (70), wobei ein Wert eines Antwortpaketanforderungsfelds in dem Dienstpaket des ersten Typs ein erster Wert ist, und das Antwortpaketanforderungsfeld anzeigt, ob die Empfangsvorrichtung (80) ein Antwortpaket an die Sendevorrichtung (70) sendet, wobei das Dienstpaket ein zu sendendes Datenpaket und Dienste umfasst, die während einer Datenpaketübertragung ausgeführt werden müssen;
Empfangen, durch die Empfangsvorrichtung (80), mindestens eines Dienstpakets eines zweiten Typs von der Sendevorrichtung (70), wobei ein Wert eines Antwortpaketanforderungsfelds in dem Dienstpaket des zweiten Typs ein zweiter Wert ist,
wobei sich der zweite Wert des Antwortpaketanforderungsfelds in dem Dienstpaket des zweiten Typs von dem ersten Wert des Antwortpaketanforderungsfelds in dem Dienstpaket des ersten Typs unterscheidet, um die Empfangsvorrichtung (80) zu veranlassen, das Antwortpaket zu senden, und
wobei die Sendevorrichtung (70) das Dienstpaket des zweiten Typs innerhalb eines ersten voreingestellten Zeitraums sendet, der kleiner als eine Umlaufzeit, RTT, ist, wobei die RTT eine Gesamtdauer ab einem Zeitpunkt, zu dem die Sendevorrichtung (70) ein Dienstpaket sendet, bis zu einem Zeitpunkt, zu dem die Sendevorrichtung (70) ein dem Dienstpaket entsprechendes Antwortpaket von der Empfangsvorrichtung (80) empfängt, ist; und
Senden, durch die Empfangsvorrichtung (80), mindestens eines Antwortpakets für das Dienstpaket des zweiten Typs an die Sendevorrichtung (70), wobei das Antwortpaket eine Antwort ist, die einen Dienstpaketempfangsstatus betrifft.

8. Verfahren nach Anspruch 7, wobei das Senden, durch die Empfangsvorrichtung (80), mindestens eines Antwortpakets für das Dienstpaket des zweiten Typs an die Sendevorrichtung (70) Folgendes umfasst:
Senden, durch die Empfangsvorrichtung (80), eines Antwortpakets für das Dienstpaket des zweiten Typs an die Sendevorrichtung (70).

9. Verfahren nach Anspruch 7, wobei das Senden, durch die Empfangsvorrichtung (80), mindestens eines Antwortpakets für das Dienstpaket des zweiten Typs an die Sendevorrichtung (70) Folgendes umfasst:
Senden, durch die Empfangsvorrichtung (80), des mindestens einen Antwortpakets zweimal an die Sendevorrichtung (70).

10. Verfahren nach Anspruch 7, wobei das Senden, durch die Empfangsvorrichtung (80), mindestens eines Antwortpakets für das Dienstpaket des zweiten Typs an die Sendevorrichtung (70) Folgendes umfasst:
Senden, durch die Empfangsvorrichtung (80), des mindestens einen Antwortpakets für ein erstes Dienstpaket des zweiten Typs und des mindestens einen Antwortpakets für ein zweites Dienstpaket des zweiten Typs, wobei das mindestens eine Antwortpaket für sowohl das erste als auch das zweite Dienstpaket des zweiten Typs unterschiedlichen Inhalt umfasst.

11. Sendevorrichtung (70), umfassend eine Übertragungseinrichtung (701) und einen Empfänger (702), wobei
die Übertragungseinrichtung (701) dazu konfiguriert ist, mindestens ein Dienstpaket eines ersten Typs an eine Empfangsvorrichtung (80) zu senden, wobei ein Wert eines Antwortpaketanforderungsfelds in dem Dienstpaket des ersten Typs ein erster Wert ist, und das Antwortpaketanforderungsfeld anzeigt, ob die Empfangsvorrichtung (80) ein Antwortpaket an die Sendevorrichtung (70) sendet, wobei das Dienstpaket ein zu sendendes Datenpaket und Dienste umfasst, die während einer Datenpaketübertragung ausgeführt werden müssen;
die Übertragungseinrichtung (701) ferner zu Folgendem konfiguriert ist: wenn das Antwortpaket erhalten werden muss, Senden mindestens eines Dienstpakets eines zweiten Typs an die Empfangsvorrichtung (70), wobei ein Wert eines Antwortpaketanforderungsfelds in dem Dienstpaket des zweiten Typs ein zweiter Wert ist,
wobei sich der zweite Wert des Antwortpaketanforderungsfelds in dem Dienstpaket des zweiten Typs von dem ersten Wert des Antwortpaketanforderungsfelds in dem Dienstpaket des ersten Typs unterscheidet, um die Empfangsvorrichtung (80) zu veranlassen, das Antwortpaket zu senden, und
wobei die Sendevorrichtung (70) das Dienstpaket des zweiten Typs innerhalb eines ersten voreingestellten Zeitraums sendet, der kleiner als eine Umlaufzeit, RTT, ist, wobei die RTT eine Gesamtdauer ab einem Zeitpunkt, zu dem die Sendevorrichtung (70) ein Dienstpaket sendet, bis zu einem Zeitpunkt, zu dem die Sendevorrichtung (70) ein dem Dienstpaket entsprechendes Antwortpaket von der Empfangsvorrichtung (80) empfängt, ist; und
wobei der Empfänger dazu konfiguriert ist, mindestens ein Antwortpaket für das Dienstpaket des zweiten Typs von der Empfangsvorrichtung (80) zu empfangen, wobei das Antwortpaket eine Antwort ist, die einen Dienstpaketempfangsstatus betrifft.

12. Sendevorrichtung nach Anspruch 11, wobei
die Übertragungseinrichtung (701) ferner dazu konfiguriert ist, ein Dienstpaket des zweiten Typs an die Empfangsvorrichtung (80) zu senden.

13. Sendevorrichtung nach Anspruch 11, wobei das Senden, durch die Sendevorrichtung (70), mindestens eines Dienstpakets des zweiten Typs an die Empfangsvorrichtung (80) Folgendes umfasst:
die Übertragungseinrichtung (701) ist ferner dazu konfiguriert, eine erste voreingestellte Anzahl an Dienstpaketen des zweiten Typs an die Empfangsvorrichtung (80) zu senden, wobei die erste voreingestellte Anzahl eine Ganzzahl größer als oder gleich 2 ist.

14. Sendevorrichtung nach Anspruch 11, wobei
die Übertragungseinrichtung (701) ferner zu Folgendem konfiguriert ist: bevor die Sendevorrichtung (70) das nächste Mal das Antwortpaket erhalten muss, fortlaufendes Senden des Dienstpakets des zweiten Typs an die Empfangsvorrichtung (80).

15. Sendevorrichtung nach Anspruch 12 oder 13, wobei
die Übertragungseinrichtung (701) ferner zu Folgendem konfiguriert ist: nach Senden mindestens eines Dienstpakets des zweiten Typs an die Empfangsvorrichtung (80), und bevor die Sendevorrichtung (70) das nächste Mal das Antwortpaket erhalten muss, Senden mindestens eines Dienstpakets eines dritten Typs an die Empfangsvorrichtung (80), wobei ein Wert eines Antwortpaketanforderungsfelds in dem Dienstpaket des dritten Typs ein dritter Wert ist; und sich der dritte Wert von dem zweiten Wert unterscheidet.

## Revendications

1. Procédé de transmission de paquets, comprenant :
l'envoi, par un dispositif d'envoi (70), d'au moins un paquet de service de premier type à un dispositif de réception (80), dans lequel une valeur d'un champ de demande de paquet de réponse dans le paquet de service de premier type est une première valeur, et le champ de demande de paquet de réponse indique si le dispositif de réception (80) envoie ou non un paquet de réponse au dispositif d'envoi (70), dans lequel le paquet de service comprend un paquet de données à envoyer et des services devant être exécutés pendant une transmission de paquet de données ;
si le paquet de réponse doit être obtenu, l'envoi, par le dispositif d'envoi (70), d'au moins un paquet de service de deuxième type au dispositif de réception (80), dans lequel une valeur d'un champ de demande de paquet de réponse dans le paquet de service de deuxième type est une deuxième valeur,
dans lequel la deuxième valeur du champ de demande de paquet de réponse dans le paquet de service de deuxième type est différente de la première valeur du champ de demande de paquet de réponse dans le paquet de service de premier type afin de déclencher l'envoi par le dispositif de réception (80) du paquet de réponse, et
dans lequel le dispositif d'envoi (70) envoie le paquet de service de deuxième type dans une première période temporelle prédéfinie qui est inférieure à un temps d'aller-retour, RTT, le RTT est la durée totale entre un point temporel auquel le dispositif d'envoi (70) envoie un paquet de service et un point temporel auquel le dispositif d'envoi (70) reçoit un paquet de réponse (80) correspondant au paquet de service depuis le dispositif de réception (80) ; et
la réception, par le dispositif d'envoi (70), d'au moins un paquet de réponse pour le paquet de service de deuxième type depuis le dispositif de réception (80), dans lequel le paquet de réponse est une réponse relative à un état de réception de paquet de service.

2. Procédé selon la revendication 1, dans lequel l'envoi, par le dispositif d'envoi (70), d'au moins un paquet de service de deuxième type au dispositif de réception (80) comprend :
l'envoi, par le dispositif d'envoi (70), d'un paquet de service de deuxième type au dispositif de réception (80).

3. Procédé selon la revendication 1, dans lequel l'envoi, par le dispositif d'envoi (70), d'au moins un paquet de service de deuxième type au dispositif de réception (80) comprend :
l'envoi, par le dispositif d'envoi (70), d'une première quantité prédéfinie de paquets de service de deuxième type au dispositif de réception (80), dans lequel la première quantité prédéfinie est un entier supérieur ou égal à 2.

4. Procédé selon la revendication 1, dans lequel l'envoi, par le dispositif d'envoi (70), d'au moins un paquet de service de deuxième type au dispositif de réception (80) comprend :
avant que le dispositif d'envoi (70) n'ait besoin d'obtenir le paquet de réponse la fois suivante, l'envoi en continu, par le dispositif d'envoi (70), du paquet de service de deuxième type au dispositif de réception (80).

5. Procédé selon la revendication 2 ou 3, après l'envoi, par le dispositif d'envoi (70) d'au moins un paquet de service de deuxième type au dispositif de réception (80) et avant que le dispositif d'envoi (70) n'ait besoin d'obtenir le paquet de réponse la fois suivante, le procédé comprenant en outre :
l'envoi, par le dispositif d'envoi (70), d'au moins un paquet de service de troisième type au dispositif de réception (80), dans lequel une valeur d'un champ de demande de paquet de réponse dans le paquet de service de troisième type est une troisième valeur ;
et la troisième valeur est différente de la deuxième valeur.

6. Procédé selon l'une quelconque des revendications 1 à 5, après l'envoi, par un dispositif d'envoi (70), d'au moins un paquet de service de premier type à un dispositif de réception (80), et avant l'envoi, par le dispositif d'envoi (70), d'au moins un paquet de service de deuxième type au dispositif de réception (80), le procédé comprenant en outre :
la détection, par le dispositif d'envoi (70), si la durée d'aller-retour, RTT, se termine ; et
si la durée du RTT se termine, la détermination, par le dispositif d'envoi (70), que le paquet de réponse doit être obtenu.

7. Procédé de transmission de paquet, comprenant :
la réception, par un dispositif de réception (80), d'au moins un paquet de service de premier type depuis un dispositif d'envoi (70), dans lequel une valeur d'un champ de demande de paquet de réponse dans le paquet de service de premier type est une première valeur, et le champ de demande de paquet de réponse indique si le dispositif de réception (80) envoie ou non un paquet de réponse au dispositif d'envoi (70), dans lequel le paquet de service comprend un paquet de données à envoyer et des services devant être exécutés pendant une transmission de paquet de données ;
la réception, par le dispositif de réception (80), d'au moins un paquet de service de deuxième type depuis le dispositif d'envoi (70), dans lequel une valeur d'un champ de demande de paquet de réponse dans le paquet de service de deuxième type est une deuxième valeur,
dans lequel la deuxième valeur du champ de demande de paquet de réponse dans le paquet de service de deuxième type est différente de la première valeur du champ de demande de paquet de réponse dans le paquet de service de premier type afin de déclencher l'envoi par le dispositif de réception (80) du paquet de réponse, et
dans lequel le dispositif d'envoi (70) envoie le paquet de service de deuxième type dans une première période temporelle prédéfinie qui est inférieure à un temps d'aller-retour, RTT, le RTT est la durée totale entre un point temporel auquel le dispositif d'envoi (70) envoie un paquet de service et un point temporel auquel le dispositif d'envoi (70) reçoit un paquet de réponse correspondant au paquet de service depuis le dispositif de réception (80) ; et
l'envoi, par le dispositif de réception (80), d'au moins un paquet de réponse pour le paquet de service de deuxième type au dispositif d'envoi (70), dans lequel le paquet de réponse est une réponse relative à un état de réception de paquet de service.

8. Procédé selon la revendication 7, dans lequel l'envoi, par le dispositif de réception (80), d'au moins un paquet de réponse pour le paquet de service de deuxième type au dispositif d'envoi (70) comprend :
l'envoi, par le dispositif de réception (80), d'un paquet de réponse pour le paquet de service de deuxième type au dispositif d'envoi (70).

9. Procédé selon la revendication 7, dans lequel l'envoi, par le dispositif de réception (80), d'au moins un paquet de réponse pour le paquet de service de deuxième type au dispositif d'envoi (70) comprend :
l'envoi, par le dispositif de réception (80), du ou des paquets de réponse deux fois au dispositif d'envoi (70).

10. Procédé selon la revendication 7, dans lequel l'envoi, par le dispositif de réception (80), d'au moins un paquet de réponse pour le paquet de service de deuxième type au dispositif d'envoi (70) comprend :
l'envoi, par le dispositif de réception (80), du ou des paquets de réponse pour un premier paquet de service de deuxième type et du ou des paquets de réponse pour un second paquet de service de deuxième type, dans lequel le ou les paquets de réponse pour le premier et le second paquet de service de deuxième type comprennent un contenu différent.

11. Dispositif d'envoi (70), comprenant un émetteur (701) et un récepteur (702), dans lequel
l'émetteur (701) est configuré pour envoyer au moins un paquet de service de premier type à un dispositif de réception (80), dans lequel une valeur d'un champ de demande de paquet de réponse dans le paquet de service de premier type est une première valeur, et le champ de demande de paquet de réponse indique si le dispositif de réception (80) envoie ou non un paquet de réponse au dispositif d'envoi (70), dans lequel le paquet de service comprend un paquet de données à envoyer et des services devant être exécutés pendant une transmission de paquet de données ;
l'émetteur (701) est en outre configuré pour : si le paquet de réponse doit être obtenu, envoyer au moins un paquet de service de deuxième type au dispositif de réception (70), dans lequel une valeur d'un champ de demande de paquet de réponse dans le paquet de service de deuxième type est une deuxième valeur,
dans lequel la deuxième valeur du champ de demande de paquet de réponse dans le paquet de service de deuxième type est différente de la première valeur du champ de demande de paquet de réponse dans le paquet de service de premier type afin de déclencher l'envoi par le dispositif de réception (80) du paquet de réponse, et
dans lequel le dispositif d'envoi (70) envoie le paquet de service de deuxième type dans une première période temporelle prédéfinie qui est inférieure à un temps d'aller-retour, RTT, le RTT est la durée totale entre un point temporel auquel le dispositif d'envoi (70) envoie un paquet de service et un point temporel auquel le dispositif d'envoi (70) reçoit un paquet de réponse correspondant au paquet de service depuis le dispositif de réception (80) ; et
le récepteur est configuré pour recevoir au moins un paquet de réponse pour le paquet de service de deuxième type depuis le dispositif de réception (80), dans lequel le paquet de réponse est une réponse relative à un état de réception de paquet de service.

12. Dispositif d'envoi selon la revendication 11, dans lequel
l'émetteur (701) est en outre configuré pour envoyer un paquet de service de deuxième type au dispositif de réception (80).

13. Dispositif d'envoi selon la revendication 11, dans lequel l'envoi, par le dispositif d'envoi (70), d'au moins un paquet de service de deuxième type au dispositif de réception (80) comprend :
l'émetteur (701) est en outre configuré pour envoyer une première quantité prédéfinie de paquets de service de deuxième type au dispositif de réception (80), dans lequel la première quantité prédéfinie est un entier supérieur ou égal à 2.

14. Dispositif d'envoi selon la revendication 11, dans lequel
l'émetteur (701) est en outre configuré pour : avant que le dispositif d'envoi (70) n'ait besoin d'obtenir le paquet de réponse la fois suivante, envoyer en continu le paquet de service de deuxième type au dispositif de réception (80).

15. Dispositif d'envoi selon la revendication 12 ou 13, dans lequel
l'émetteur (701) est en outre configuré pour : après l'envoi d'au moins un paquet de service de deuxième type au dispositif de réception (80) et avant que le dispositif d'envoi (70) n'ait besoin d'obtenir le paquet de réponse la fois suivante, envoyer au moins un paquet de service de troisième type au dispositif de réception (80), dans lequel une valeur d'un champ de demande de paquet de réponse dans le paquet de service de troisième type est une troisième valeur ; et la troisième valeur est différente de la deuxième valeur.
